# EUROPEAN PATENT APPLICATION

(11) **EP 4 533 949 A1**
(43) Date of publication of application: **09.04.2025**
(21) Application number: 23815996.6
(22) Date of filing: 29.05.2023
(51) Int. Cl.: A01N 59/16, A01P 1/00

(54) **ANTIVIRAL COMPOSITION AND MEMBER HAVING SAME ON SURFACE**

(30) Priority: 30.05.2022 JP 2022087676
(71) Applicant: SHIN-ETSU CHEMICAL CO., LTD., Tokyo 1000005 (JP)
(72) Inventor: HINOUE Mikiya, Kamisu-shi, Ibaraki 314-0102 (JP); INOUE Tomohiro, Kamisu-shi, Ibaraki 314-0102 (JP); FURUDATE Manabu, Kamisu-shi, Ibaraki 314-0102 (JP)
(74) Representative: Angerhausen, Christoph
(86) International application number: PCT/JP2023/019868
(87) International publication number: WO 2023/234239

(57) **Abstract**

Provided is an antiviral composition capable of forming, on a surface of a member, a composition that exhibits antiviral activities and is highly transparent. The antiviral composition contains silver nanoparticles as an active component, said silver nanoparticles having a protection agent adsorbed on the surfaces of the nanoparticles and having a dispersed particle diameter of 1000 nm or less and a primary particle diameter of 500 nm or less, wherein the composition exhibits an antiviral activity value greater than 0.3 based on JIS R1756:2020 in a dark place, while the composition exhibits an antiviral activity value that is positively affected by light irradiation based on JIS R1756:2020.

## Description

### Technical Field

The present invention relates to an antiviral composition containing a specific type of silver nanoparticles as active components and a member having the composition on a surface thereof, and the present invention specifically relates to a highly transparent antiviral composition that exhibits antiviral activities in a dark place and whose antiviral activities are further improved by irradiation with light, and a member having the composition on a surface thereof.

### Background Art

In recent years, consumers are becoming more likely to pursue hygienic living environments, leading to a rise in interest in daily necessities treated to maintain cleanliness, such as those treated with antiviral treatment.

Achieving the formation of a composition with antiviral activities on the surfaces of various components opens up a wide range of applications. Thus, there is a demand for technology that can impart these antiviral activities to members.

When a subject to which antiviral activities are to be imparted requires visibility such as in the case of an operation touch screen or when the article is a member of design excellence, it is desirable for the antiviral composition formed on the surface to have excellent transparency.

Photocatalytic materials are attracting attention because they can provide a wide range of effects for cleaning the surface of base materials, including antiviral and deodorizing properties through the photocatalytic reactions that occur when exposed to light such as sunlight or artificial lighting.

The photocatalytic reaction refers to a reaction caused by excited electrons and holes generated when a photocatalyst, as typified by titanium oxide, absorbs light. The excited electrons and holes generated on the titanium oxide surface by the photocatalytic reaction undergo an oxidation-reduction reaction with oxygen and water adsorbed on the titanium oxide surface and generate activated species. These activated species break down microorganisms, viruses, and sources of odors and dirt made of organic matter, thereby achieving the aforementioned cleaning effects on the surfaces of basic material. However, the photocatalytic reaction is triggered by irradiation with a light of ultraviolet region (wavelength of 10 to 400 nm) or a visible light region (400 to 800 nm), and therefore the effect thereof cannot in principle be obtained in a dark place not exposed to natural light or artificial lighting.

Meanwhile, it is known that viruses adhering to an object maintain their infectivity for several hours to several days, and therefore products requiring a long-lasting performance such as antiviral products need materials that exhibit antiviral activities even in a dark place not exposed to light.

It is known that copper monoxide compounds such as cuprous oxide have antiviral activities (Patent document 1). However, monovalent copper readily oxidizes into divalent copper in the presence of air or water, which means that the monovalent copper has an issue that its high antiviral activities cannot be maintained.

There have been many reports that silver exhibits a broad antibacterial spectrum. For example, Patent document 2 discloses an antibacterial agent that leverages the antibacterial efficacy of silver ions. Meanwhile, fewer reports have in fact been reported on the antiviral activities of silver compared to reports on its antibacterial properties. In addition, silver is recognized to exhibit low antiviral activities against non-enveloped viruses (Non-patent document 1).

In addition, silver is recognized to exhibit low antiviral activities against non-enveloped viruses (Non-patent document 1).

Patent document 3 reports that metal particles containing silver particles and platinum particles exhibit antiviral activities against non-enveloped viruses. However, this document states that silver particles alone cannot inactivate some viruses such as adenoviruses. Furthermore, Patent document 3 evaluates the antiviral activities of an antiviral agent dispersion liquid, but the document is silent on imparting antiviral efficacies to a member and on irradiation efficacy.

The antiviral activities of molybdenum oxide and zinc oxide have been reported (Patent Document 4 and Patent Document 5). However, these metal oxides tend to readily aggregate, and it is difficult to obtain a composition having a transparency that is required for practical use.

### PRIOR ART DOCUMENTS

### Patent documents

Patent document 1: JP-A-2014-231525
Patent document 2: JP-A-2010-202561
Patent document 3: WO-A-2020/162485
Patent document 4: JP-A-2019-182846
Patent document 5: WO-A-2013/073555

### Non Patent documents

Non-patent document 1: Y.Mori et al.;Nanoscale Research Letters 8,93,(2013)

### Summary of Invention

### Technical Problem

It is therefore an object of the present invention to provide an antiviral composition capable of forming, on a surface of a member, a composition that exhibits antiviral efficacy and is highly transparent.

### Solution to Problem

The inventors have conducted intensive studies to achieve the foregoing object and have consequently found that the following antiviral composition containing a specific type of silver nanoparticles can achieve the foregoing object, thus completing the present invention.

That is, the present invention provides an antiviral composition and a member having the composition on a surface thereof as defined below.
<1> An antiviral composition containing silver nanoparticles as an active component, said silver nanoparticles having a protection agent adsorbed on the surfaces of the nanoparticles and having a dispersed particle diameter of 1000 nm or less and a primary particle diameter of 500 nm or less,
   wherein the composition exhibits an antiviral activity value greater than 0.3 based on JIS R1756:2020 in a dark place, while the composition exhibits an antiviral activity value that is positively affected by light irradiation based on JIS R1756:2020.
<2> The antiviral composition according to <1>, wherein an amount by mass of the protection agent to the amount by mass of metal components in the silver nanoparticles is in a range from 0.001 to 10.
<3> The antiviral composition according to <1> or <2>, wherein the composition exhibits a haze value of 3% or less.
<4> A member comprising the antiviral composition according to <3> on a surface of the member.
<5> The antiviral composition according to claim <1> or <2>, further comprising an aqueous dispersion medium.

### Advantageous Effects of Invention

The present invention may provide a highly transparent composition that demonstrate strong antiviral activities in a dark place and further enhances these antiviral activities by irradiation with light, and the invention further provides a member having antiviral activity and transparency when the composition is applied to a surface of the member.

### Description of Embodiments

Described in detail below will be the antiviral composition of the present invention.

The term "antiviral" as used in this specification refers to a wording that encompasses a meaning of inactivating viruses (deactivation or decrease in viral infectivity). The antiviral property was evaluated based on criteria as described in the working examples using "antiviral activity value" calculated in accordance with JIS R 1756: 2020 "Fine ceramics-Antiviral test method for visible light responsive photocatalytic material-Method using bacteriophage Qβ"

Viruses are broadly classified into enveloped (lipid bilayer) viruses and non-enveloped viruses based on their structure, and bacteriophage Qβ is a non-enveloped virus. The bacteriophage Qβ was used to evaluate the antiviral activity of the present invention, considering that non-enveloped viruses are generally regarded as more resistant to disinfectants compared to enveloped viruses, and that a highly accurate and reproducible test method for the phage has been established.

The viruses against which the antiviral composition of the present invention exerts its antiviral activities may be enveloped or not enveloped. Examples of enveloped viruses include bacteriophage ϕ6, human influenza virus, avian influenza virus, rubella virus, herpes simplex virus, AIDS virus, dengue virus, mimivirus, rabies virus, Ebola virus, Lassa virus, mpox virus, SARS coronavirus, MERS coronavirus, Ebola virus, Fusellovirus, West Nile virus, and Zika virus. Examples of non-enveloped viruses include bacteriophage Qβ, adenovirus, norovirus, feline calicivirus, rotavirus, sapovirus, poliovirus, astrovirus, enterovirus, human papillomavirus, hepatitis E virus, and tobacco mosaic virus.

### <Antiviral Composition>

The silver nanoparticle contained in the antiviral composition of the present invention may contain at least silver and optionally a further component. Examples of such non-silver component include, but are not particularly limited to, one kind or a mixture or alloy of two or more kind selected from copper, zinc, platinum, palladium, nickel, aluminum, titanium, cobalt, zirconium, molybdenum, tungsten, gold, antimony, tin, sodium, magnesium, silicon, phosphorus, sulfur, potassium, calcium, scandium, vanadium, chromium, manganese, iron, gallium, germanium, arsenic, selenium, yttrium, niobium, ruthenium, rhodium, indium, tellurium, barium, hafnium, tantalum, rhenium, osmium, iridium, mercury, thallium, lead, bismuth, lanthanum, cerium, praseodymium, neodymium, samarium, europium, gadolinium, thorium. Of these. it is preferred that the non-silver component contained in the silver nanoparticles be a non-silver metal component and it is more preferred that the component be iron, palladium, gold, platinum, copper, zinc, tin, molybdenum, titanium, or tungsten.

When the silver nanoparticles contain a non-silver metal component, the amount thereof is preferably 0.01 to 49% by mass, more preferably 0.1 to 40% by mass, and even more preferably 1 to 30% by mass based on the mass of the metal components in the silver nanoparticles. This is because a content of the non-silver metal component exceeding 50% by mass of the metal components in the silver nanoparticles may fail to exhibit sufficient antiviral activities. Additionally, a content of the non-silver metal component less than 0.01% by mass hardly influences the properties of the silver nanoparticles, such as antiviral activities or dispersion stability.

The present invention provides an antiviral composition containing silver nanoparticles on which a protective agent is adsorbed. The protective agent as used herein refers to, for example, a surfactant that has the property of being accumulated at an interface between two phases, a compound having a low molecular weight metal ligand that has a strong interaction with metal particles, such as an alkylthiol, an amine group, a silane group, or a phosphine group, or a polymer that has a large number of adsorption segments and tends to be easily adsorbed to the particle surface. These substances are adsorbed or coordinated to the surface of silver nanoparticles to thereby make the silver nanoparticles have electrostatic or steric repulsion between themselves, thereby suppressing the coalescence and aggregation of the silver nanoparticles to keep the dispersed state. Specific examples of the protective agent include surfactants such as anionic surfactants, cationic surfactants, nonionic surfactants and amphoteric surfactants; water-soluble polymer compounds such as polyvinylpyrrolidone, polyvinyl alcohol, polyethylenimine, polyethylene oxide, polyacrylic acid, and methylcellulose; amino acids such as cysteine, arginine, asparagine, and aspartic acid; aliphatic amine compounds such as ethanolamine, diethanolamine, triethanolamine, and propanolamine; polyphenols such as tannic acid, gallocatechin, gallic acid, pyrogallol, 4-benzylpyrogallol (2,3,4-trihydroxydiphenylmethane), and ellagitannin; primary amine compounds such as butylamine, dibutylamine, hexylamine, cyclohexylamine, heptylamine, 3-butoxypropylamine, octylamine, nonylamine, decylamine, dodecylamine, hexadecylamine, oleylamine, and octadecylamine; diamine compounds such as N,N-dimethylethylenediamine, and N,N-diethylethylenediamine; and carboxylic acid compounds such as oleic acid, citric acid, and their salts. The protective agent may be any one of the above-listed compounds or two or more of them may be used in combination.

The mass ratio of the protective agent adsorbed on the surfaces of silver nanoparticles relative to the metal components in the silver nanoparticles is preferably in a range from 0.001 to 10, more preferably in a range from 0.005 to 5, and even more preferably in a range from 0.01 to 1.

The silver nanoparticles have a dispersed particle diameter of 1000 nm or less, preferably of 1 to 1000 nm, even more preferably of 1 to 200 nm, and still more preferably of 1 to 70 nm when the diameter is a 50% cumulative distribution diameter (D50) based on the number of particles measured by dynamic light scattering using a laser beam. Regarding the lower limit of the dispersed particle diameter, although the used particles may theoretically have the smallest particle diameter possible capable of exhibiting antiviral activity, it is preferred in practice that the diameter be 1 nm or more. Further, the particles having a dispersed particle diameter exceeding 1000 nm are not preferred because the antiviral composition made from such particles not only deteriorates its haze value but also may decrease the antiviral activity. As a devise for measuring the dispersed particle diameter, ELSZ-2000ZS (manufactured by Otsuka Electronics Co., Ltd.), Nanotrac UPA-EX150 (manufactured by Nikkiso Co., Ltd.), LA-910 (manufactured by Horiba, Ltd.) can be used.

The silver nanoparticles have a primary particle diameter of 500 nm or less, preferably of 1 to 500 nm, more preferably of 1 to 100 nm, and even more preferably of 1 to 50 nm. Regarding the lower limit of the primary particle diameter, although the used particles may theoretically have the smallest particle diameter possible capable of exhibiting antiviral activity, it is preferred in practice that the diameter be 1 nm or more. Further, the particles having a primary particle diameter exceeding 500 nm are not preferred because the antiviral composition made from such particles not only makes the composition opaque but also may decrease the antiviral efficacy. The term "primary particle diameter" as used herein refers to, unless otherwise specifically stated, an arithmetic mean value of the projected area equivalent circle diameter (Heywood diameter) of approximately 1,000 non-overlapping particles randomly selected from multiple particle images taken using, for example, a transmission electron microscope (e.g., H-9500 manufactured by Hitachi High-Technologies Corporation).

It is preferred that the content by mass of the silver nanoparticles in the antiviral composition be 0.0001 to 100% by mass, more preferably 0.001 to 90% by mass. Further, the antiviral composition may contain not only the silver nanoparticles but also an additive such as a binder or a surfactant so long as the advantageous effects of the present invention are not impaired.

An embodiment of the antiviral composition of the present invention includes an antiviral composition (silver nanoparticle dispersion liquid) containing not only the above-mentioned silver nanoparticles but also an aqueous dispersion medium.

An aqueous solvent is normally used in the aqueous dispersion medium of the silver nanoparticle dispersion liquid, and it is preferable to use water, a water-soluble organic solvent miscible with water, or a mixed solvent of water and a water-soluble organic solvent. Preferable examples of water include a deionized water, a distilled water, and a pure water. Further, examples of the water-soluble organic solvent include alcohols such as methanol, ethanol, n-propanol, 2-propanol, n-butanol, 2-butanol, tert-butanol, ethylene glycol, diethylene glycol and polyethylene glycol; glycol ethers such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether and propylene glycol-n-propyl ether; ketones such as acetone and methyl ethyl ketone; water-soluble nitrogen-containing compounds such as 2-pyrrolidone and N-methylpyrrolidone; and ethyl acetate. Any one of them may be used, or two or more of them may be used in combination.

There is no particular restriction on the concentration of the silver nanoparticles in the silver nanoparticle dispersion liquid, but it is preferred that the silver component be contained therein at a concentration of 0.0001 to 10% by mass, more preferably of 0.001 to 5% by mass, even more preferably of 0.01 to 1% by mass as the particles contained therein at a lower concentration generally tend to have more favorable dispersibility. A concentration less than 0.0001% by mass significantly reduces productivity and is therefore unfavorable.

The antiviral composition of the present invention demonstrates strong antiviral activities in a dark place and further enhances these antiviral activities upon irradiation with light, where the composition exhibits an antiviral activity value greater than 0.3 based on JIS R1756:2020 in a dark place, while the composition exhibits an antiviral value that is positively affected by light irradiation based on JIS R1756:2020.

The light for enhancing the antiviral activity may be any light that contains a wavelength absorbable by the silver nanoparticles, and the specific wavelength thereof is 200 to 800 nm, more preferably 300 to 700 nm. The light less than 200 nm potentially exhibits antiviral activity in the light itself, and is not practical, while the light exceeding 800 nm may make it difficult to enhance the antiviral activity using light irradiation. Any light source may be used so long as it contains light of these wavelengths, and examples of which include a fluorescent lamp, an LED, an incandescent lamp, a low-pressure sodium lamp, a high-pressure sodium lamp, a metal halide lamp, a mercury lamp, a xenon lamp, an organic electroluminescence (EL), a krypton lamp, a halogen lamp, and sunlight. These may be used alone or in combination of two or more kinds. The light irradiation illuminance is 5 to 100,000 lx, more preferably 10 to 50,000 lx. A light irradiation illuminance of less than 5 lx may make it difficult to check light irradiation efficacy, while the light irradiation illuminance greater than 100,000 lx is an unrealistic condition in a practical environment. As a device for measuring illuminance, for example, LX-105 (manufactured by CUSTOM corporation.), CHF-LT1 (manufactured by SANWA SUPPLY INC.), T-10A (manufactured by Konica Minolta Japan, Inc.) may be used. Although there is no particular restriction on the irradiation time, the irradiation time is preferably about 1 minute to 48 hours due to the nature of the antiviral activity measurement test.

### [Manufacturing Method]

The method for manufacturing the antiviral composition of the present invention, particularly for manufacturing the silver nanoparticle dispersion liquid may include, for example, the following steps (1) to (3) of:
Step (1) of producing a solution containing a raw material silver compound and a solution in which a reducing agent and a protective agent are dissolved in an aqueous dispersion medium;
Step (2) of mixing the solution containing the raw material silver compound and the solution containing the reducing and protective agents produced in the step (1) to produce a silver nanoparticle dispersion liquid;
Step (3) of washing the silver nanoparticle dispersion liquid produced in the step (2) with an aqueous dispersion medium using membrane filtration;

### Step (1):

In Step (1), two types of solutions (1-1) and (1-2) are produced, where the solution (1-1) is a solution in which a raw material silver compound is dissolved in an aqueous dispersion medium and the solution (1-2) is a solution in which a reducing agent and a protective agent are dissolved in an aqueous dispersion medium. The reducing agent in the solution (1-2) serves to reduce the raw material silver compound in the solution (1-1). Further, the protective agent in the solution (1-2) serves to enhance dispersion stability in the dispersion medium by being adsorbed on the surface of the silver compound when the solutions (1-1) and (1-2) are subsequently mixed in Step (2) while the silver compound is reduced.

The manner of producing these solutions may be the one of adding the raw material silver compound and the reducing and protective agents separately into the respective aqueous dispersion mediums, and dissolving them by stirring. The stirring method is not particularly limited so long as it can dissolve the components uniformly in the aqueous dispersion medium, and any commercially available stirrer may be used therefor.

Various silver compounds may be used for the raw material silver compound, and examples of which include; inorganic acid salts of silver such as a silver salt of chloride, a silver salt of nitrate and a silver salt of sulfate; organic acid salts of silver such as a silver salt of formic acid, a silver salt of citric acid, a silver salt of oxalic acid, a silver salt of lactic acid and a silver salt of glycolic acid; and complex salts of silver such as an amine complex, a cyano complex, a halogeno complex, and a hydroxy complex of silvers. Any one of them may be used alone, or two or more of them may be used in combination. Particularly, it is preferable to use an inorganic acid salt of silver such as silver salt of chloride, silver salt of nitrate, or silver salt of sulfate.

The amount of the raw material silver compound contained therein is determined such that the solution (1-1) containing the raw material silver compound has an Ag concentration of 0.5 to 200 mmol/L, preferably of 5 to 100 mmol/L.

When the silver nanoparticles contain a non-silver component, it is preferable to further add a raw material compound of the non-silver component into the solution (1-1) containing the raw material silver compound and dissolve it.

Examples of such raw material compounds of the non-silver component include inorganic acid salts, such as chloride salts, nitrate salts, and sulfate salts, of, for example, zinc, platinum, palladium, nickel, aluminum, titanium, cobalt, zirconium, molybdenum, tungsten, gold, antimony, tin, sodium, magnesium, silicon, phosphorus, sulfur, potassium, calcium, scandium, vanadium, chromium, manganese, iron, gallium, germanium, arsenic, selenium, yttrium, niobium, ruthenium, rhodium, indium, tellurium, barium, hafnium, tantalum, rhenium, osmium, iridium, mercury, thallium, lead, bismuth, lanthanum, cerium, praseodymium, neodymium, samarium, europium, gadolinium, and thorium; salts of organic acids, such as formic acid, citric acid, oxalic acid, lactic acid, and glycolic acid, with, for example, zinc, platinum, palladium, nickel, aluminum, titanium, cobalt, zirconium, molybdenum, tungsten, gold, antimony, tin, sodium, magnesium, silicon, phosphorus, sulfur, potassium, calcium, scandium, vanadium, chromium, manganese, iron, gallium, germanium, arsenic, selenium, yttrium, niobium, ruthenium, rhodium, indium, tellurium, barium, hafnium, tantalum, rhenium, osmium, iridium, mercury, thallium, lead, bismuth, lanthanum, cerium, praseodymium, neodymium, samarium, europium, gadolinium, and thorium; and salts of complexes, such as ammine complexes, cyano complexes, halogeno complexes, and hydroxy complexes with, for example, zinc, platinum, palladium, nickel, aluminum, titanium, cobalt, zirconium, molybdenum, tungsten, gold, antimony, tin, sodium, magnesium, silicon, phosphorus, sulfur, potassium, calcium, scandium, vanadium, chromium, manganese, iron, gallium, germanium, arsenic, selenium, yttrium, niobium, ruthenium, rhodium, indium, tellurium, barium, hafnium, tantalum, rhenium, osmium, iridium, mercury, thallium, lead, bismuth, lanthanum, cerium, praseodymium, neodymium, samarium, europium, gadolinium, and thorium.

The amount of the raw material compound of the non-silver component contained therein is determined such that the concentration of the element of the corresponding component is 0.01 to 40 mmol/L, preferably of 0.1 to 20 mmol/L.

Examples of the aqueous dispersion medium in the solution (1-1) containing the raw material silver compound include the media similar to those already listed as aqueous dispersion media of the silver nanoparticle dispersion liquid, and the amount thereof is a remainder of the contents of the raw material silver compound and non-silver components as explained above.

There are no particular restrictions on the types of reducing agent; there may be used any type of various reducing agents with the proviso that it is capable of reducing silver ions in the raw material silver compound. Examples of which include hydrazines such as hydrazine, hydrazine monohydrate, phenylhydrazine, and hydrazinium sulfate; amines such as dimethylaminoethanol, triethylamine, octylamine, dimethylaminoborane, and benzotriazole; organic acids such as oxalic acid, citric acid, ascorbic acid, tartaric acid, malic acid, malonic acid, and formic acid; polyphenols such as gallic acid, chlorogenic acid, catechin, cyanidin, epigallocatechin, delphinidin, tannic acid, and saponin; aldehydes such as formaldehyde, acetaldehyde, and glycolaldehyde; hydrides such as sodium borohydride, lithium borohydride, lithium triethylborohydride, lithium aluminum hydride, diisobutylaluminum hydride, tributyltin hydride, lithium tri(sec-butyl)borohydride, potassium tri(sec-butyl)borohydride, zinc borohydride, and sodium acetoxyborohydride; pyrrolidones such as polyvinylpyrrolidone (PVP), 1-vinylpyrrolidone, N-vinylpyrrolidone, and methylpyrrolidone; reducing sugars such as glucose, galactose, mannose, fructose, sucrose, maltose, raffinose, and stachyose; divalent iron compounds such as iron (II) sulfate, ferrous oxide (II), ammonium ferrous sulfate (II), ferrous chloride (II), ferrous perchlorate (II), ferrous oxalate (II), ferrous fumarate (II), and potassium hexacyanoferrate (II); and sugar alcohols such as sorbitol and their salts. Any one of them may be used or two or more of them may be used in combination. Of these, particularly preferred examples of them are hydrazines such as hydrazine monohydrate, salts of organic acid such as sodium citrate, polyphenols such as gallic acid and tannic acid, hydrides such as sodium borohydride, and aldehydes such as formaldehyde and glycolaldehyde because they have excellent capability of reducing silver ions, have small molecular weight, and can be readily filtered out in the process of washing the aqueous solvent of silver nanoparticles. Examples of the aqueous dispersion medium for dissolving the reducing agent include those same as the aqueous dispersion medium used for the above-mentioned metal compounds.

The amount of the reducing agent contained therein may be 0.001 to 50% by mass, preferably 0.01 to 40% by mass based on the total mass of the solution (1-2) containing the reducing and protective agents. This amount is based on the fact that the content of the reducing agent exceeding 50% by mass results in relatively small contents of the protective agent and the aqueous solvent, which prohibits the protective agent from being adsorbed in a sufficient amount on the surface of the silver nanoparticles, and potentially prevents the formation of silver nanoparticles having enhanced dispersion stability, and that the content of the reducing agent less than 0.001% by mass requires a large amount of solution containing the reducing and protective agents to be added into the solution containing the raw material silver compound and is therefore impractical.

There are no particular restrictions on the types of the protective agent; there may be used any type of various protective agents, with the proviso that it is capable of being adsorbed on the surface of the reduced raw material silver compound to enhance the dispersion stability in the aqueous dispersion medium. Specific examples of the protective agent include surfactants such as anionic surfactants, cationic surfactants, nonionic surfactants, and ampholytic surfactants; water-soluble polymer compounds such as **PVP,** polyethylene glycol, polyvinyl alcohol, polyethyleneimine, polyethylene oxide, polyacrylic acid, and methylcellulose; amino acids such as cysteine, arginine, asparagine, and aspartic acid; aliphatic amine compounds such as ethanolamine, diethanolamine, triethanolamine, and propanolamine; polyphenols such as tannic acid, gallocatechin, gallic acid, pyrogallol, 4-benzylpyrogallol (2,3,4-trihydroxydiphenylmethane), and ellagitannin; primary amine compounds such as butylamine, dibutylamine, hexylamine, cyclohexylamine, heptylamine, 3-butoxypropylamine, octylamine, nonylamine, decylamine, dodecylamine, hexadecylamine, oleylamine, and octadecylamine; diamine compounds such as N,N-dimethylethylenediamine and N,N-diethylethylenediamine; and carboxylic acid compounds such as oleic acid and citric acid as well as their salts. One type of them may be used alone or two or more types of them may be used in combination. Of these, particularly preferred examples of them are organic acid salts such as sodium citrate, polyphenols such as gallic acid and tannic acid, and carboxylic acid compounds such as sodium oleate because they have excellent stabilizing efficacy on silver nanoparticles, have small molecular weight, and can be readily filtered out in the process of washing the aqueous solvent of silver nanoparticles. One type of them may be used alone or two or more types of them may be used in combination. Although such combination is not particularly limited, it is preferable to use not only, for example, PVP or sodium citrate that is excellent in stabilizing efficacy on the silver nanoparticles but also to concurrently use silicate soda, gelatin, an aliphatic amine compound or a hindered amine as a protective agent because such use can enhance the durability. It is also preferable to use a surfactant or a polyphenol as a protective agent because such use can enhance antiviral efficacy.

It is preferred that the amount of the protective agent contained therein be 0.001 to 60% by mass, more preferably 0.01 to 50% by mass based on the total mass of the solution (1-2) containing the reducing and protective agents. This amount is based on the fact that the content of the protective agent exceeding 60% by mass results in relatively small contents of the reducing agent and the aqueous solvent, which not only reduces the yield of the silver nanoparticles but also necessitates a large amount of aqueous solvent in a subsequent process of washing the silver nanoparticle dispersion liquid with an aqueous solvent and is therefore impractical, and that the content of the protective agent less than 0.001% by mass prohibits the protective agent from being adsorbed in a sufficient amount on the surface of the silver nanoparticles, and potentially prevents formation of silver nanoparticles having enhanced dispersion stability.

Preferable examples of the aqueous dispersion medium (aqueous solvent) of the solution (1-2), containing the reducing and protective agents, include water, a water-soluble organic solvent miscible with water, or a mixed solvent of water and a water-soluble organic solvent. Preferable examples of water include a deionized water, a distilled water, and a pure water. Further, examples of the water-soluble organic solvent include alcohols such as methanol, ethanol, isopropanol, n-propanol, 2-propanol, n-butanol, 2-butanol, tert-butanol, ethylene glycol, and diethylene glycol; glycol ethers such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, and propylene glycol-n-propyl ether; ketones such as acetone and methyl ethyl ketone; water-soluble nitrogen-containing compounds such as 2-pyrrolidone and N-methylpyrrolidone; and ethyl acetate. Any one of them may be used, or two or more of them may be used in combination as the water-soluble organic solvent.

The amount of the aqueous solvent contained therein may be 1 to 99.99% by mass, preferably 1 to 99.9% by mass, based on the total mass of the solution (1-2) containing the reducing and protective agents. This amount is based on the fact that the content of the aqueous solvent exceeding 99.99% by mass requires a large amount of the solution containing the reducing and protective agents to be added into the solution containing the raw material silver compound and is therefore impractical, and that the content of the aqueous solvent less than 1% by mass contribute little to the effects of improving the flowability of the solution containing the reducing and protective agents.

Basic or acidic substance may be added to the solution (1-2) containing the reducing and protective agents. Examples of the basic substances include alkali metal hydroxides such as sodium hydroxide and potassium hydroxide; alkali metal carbonates such as sodium carbonate and potassium carbonate; alkali metal hydrogen carbonates such as sodium hydrogen carbonate and potassium hydrogen carbonate; alkali metal alkoxides such as potassium tert-butoxide, sodium methoxide and sodium ethoxide; alkali metal salts of aliphatic hydrocarbons such as butyl lithium; and amines such as triethylamine, diethylaminoethanol and diethylamine.

Examples of the acidic substances include inorganic acids such as aqua regia, hydrochloric acid, nitric acid and sulfuric acid; and organic acids such as formic acid, acetic acid, chloroacetic acid, dichloroacetic acid, oxalic acid, trifluoroacetic acid, and trichloroacetic acid.

The content of the basic or acidic substance may be 0 to 30% by mass, preferably 0 to 20% by mass based on the total mass of the solution (1-2) containing the reducing and protective agents, and the lower limit thereof when the substance is formulated is 0.0001% by mass. This amount is based on the fact that the content of the basic or acidic substance exceeding 30% by mass results in a relatively small content of the reducing agent or the protective agent, which potentially prevents the formation of silver nanoparticles having enhanced dispersion stability, and that the content of the basic or acidic substance less than 0.0001% by mass influence little to the pH of the solution containing the reducing and protective agents.

Although no particular restrictions will be imposed on the concentrations of these two solutions, there is a tendency that the lower these concentrations are, the smaller a primary particle diameter of each silver nanoparticle formed will become. That is, it is preferred that a preferable concentration range(s) be determined based on the target range of primary particle diameter.

The mixture of these two solutions may have any pH level with the proviso that it allows the reduction of silvers. The suitable pH range varies in accordance with the type of reducing agent to be used, but it is preferred that the pH levels of the mixture of these two solutions be adjusted to a pH within the range of 0 to 7 when, for example, a divalent iron compound is used as a reducing agent for allowing a reduction reaction to proceed in an acidic solution. A pH exceeding 7 is not preferable because such pH may cause the reduction reaction of silver to fail, while a pH of less than 0 is not preferable because such pH makes the subsequent filtration step necessitate enormous effort and reduces productivity. It is also preferred that the pH levels of the mixture of these two solutions be adjusted to a pH within the range of 7 to 15 when, for example, a hydrazine or polyphenol is used as a reducing agent for allowing a reduction reaction to proceed in a basic solution. A pH of less than 7 is not preferable because such pH may cause the reduction reaction of silver to fail, while a pH exceeding 15 is not preferable because such pH makes the subsequent filtration step necessitate enormous effort and reduces productivity.

### Step (2):

In the step (2), a solution in which the raw material silver compound is dissolved in the aqueous dispersion medium and a solution in which the reducing and protective agents are dissolved in an aqueous dispersion medium, having been prepared in the step (1), are mixed with each other to produce a silver nanoparticle dispersion liquid.

There are no particular restrictions on a method for mixing these two solutions, as long as the method employed allows the two solutions to be uniformly mixed together. For example, there may be employed a method where the silver nanoparticle compound solution and the solution of reducing and protective agents are put into a reaction container before being stirred and mixed together; a method where stirring and mixing is performed in a way such that the solution of the reducing and protective agents is delivered by drops thereinto while stirring the silver nanoparticle compound solution put in a reaction container; a method where stirring and mixing is performed in a way such that the silver nanoparticle compound is delivered by drops thereinto while stirring the solution of the reducing and protective agents put in a reaction container; a method where the silver nanoparticle compound solution and the solution of the reducing and protective agents are continuously supplied in constant amounts using, for example, a reaction container or a microreactor to perform the mixing.

There are no particular restrictions on a temperature at the time of performing mixing; it is preferred that the temperature be adjusted to a preferable temperature based on, for example, a target molar ratio of silver to the non-silver metal component in the silver nanoparticles, a target primary particle diameter, and a target reaction time.

### Step (3):

In the step (3), the silver nanoparticle dispersion liquid produced in the step (2) is washed with an aqueous dispersion medium by a membrane filtration method.

As the aqueous dispersion medium, it is preferred that there be used water, a water-soluble organic solvent miscible with water, or a mixed solvent of water and a water-soluble organic solvent. Preferable examples of water include, for example, a deionized water, a distilled water, and a pure water. Further, examples of the water-soluble organic solvent include alcohols such as methanol, ethanol, isopropanol, n-propanol, 2-propanol, n-butanol, 2-butanol, tert-butanol, ethylene glycol, and diethylene glycol; glycol ethers such as ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, and propylene glycol-n-propyl ether; ketones such as acetone and methyl ethyl ketone; water-soluble nitrogen-containing compounds such as 2-pyrrolidone and N-methylpyrrolidone; and ethyl acetate. As the water-soluble organic solvent, any one of them may be used alone, or two or more of them may be used in combination.

A membrane filtration method is used to wash and separate, from the silver nanoparticle dispersion liquid, non-volatile impurities other than the silver nanoparticles, such as non-silver components in the raw material silver compound, a reducing agent, and a protective agent not adsorbed on the silver nanoparticles. It is preferred that washing be performed repeatedly until a mass ratio of the protective agent adsorbed on the surface of silver nanoparticles to the total mass of the metal components in the silver nanoparticles in the silver nanoparticle dispersion liquid has reached 0.01 to 10, more preferably 0.001 to 5, even more preferably 0.001 to 1. A mass ratio lower than 0.001 may reduce the dispersion stability of the silver nanoparticles, while a mass ratio exceeding 10 may prevent antiviral efficacy from sufficiently being exhibited because of the excessive amount of the protective agent adsorbed on the surface of silver nanoparticles.

### Determination of Metal Component Concentration in Silver Nanoparticle Dispersion Liquid (ICP-OES)

The metal component concentration in the silver nanoparticles can be measured by appropriately diluting the silver nanoparticle dispersion liquid with pure water, and then introducing the diluted liquid into an inductively coupled plasma optical emission spectrometer (Product name "Agilent 5110 ICP-OES" by Agilent Technologies, Inc.)

### Determination of Protective Agent adsorbed on the surface of Silver nanoparticles in Silver nanoparticle Dispersion Liquid

Here, the concentration of the protective agent adsorbed on the surface of silver nanoparticle in the silver nanoparticle dispersion liquid can be calculated by subtracting the metal component concentration determined by the above ICP-OES from a non-volatile content concentration that is calculated based on a mass of the non-volatile contents (Metal components + Protective agent adsorbed on the surface of silver nanoparticles), observed after the solvent has been volatilized as a result of heating part of the silver nanoparticle dispersion liquid as a sample at 105°C for three hours, and a mass of the sampled silver nanoparticle dispersion liquid. Concentration (ppm) of the protective agent adsorbed on the surface of silver nanoparticles = {Mass (g) of the non-volatile contents/Mass (g) of silver nanoparticle dispersion liquid} × 100 × 10000 - Metal component concentration (ppm) in silver nanoparticle dispersion liquid

The mass ratio of the protective agent adsorbed on the surface of silver nanoparticles to the silver can be calculated from the concentration of the protective agent adsorbed on the surface of the resultant silver nanoparticles as: Mass ratio of protective agent adsorbed on the surface of silver nanoparticles to the Metal components = Concentration (ppm) of the protective agent adsorbed on the surface of silver nanoparticles/Metal component concentration (ppm) in silver nanoparticles.

There are no particular restrictions on a membrane to be used in the membrane filtration method, as long as the membrane used is capable of separating the silver nanoparticles and the non-volatile impurities other than the silver nanoparticles from the silver nanoparticle dispersion liquid. Examples of such membrane include a microfiltration membrane, an ultrafiltration membrane, and a nanofiltration membrane. Among these membranes, filtration can be carried out using a membrane having a suitable pore size.

As a filtration method, there may also be employed any of, for example, centrifugal filtration, pressure filtration, and cross-flow filtration.

As for the shape of the filtration membrane, there may be appropriately employed any of, for example, a hollow-fiber type, a spiral type, a tubular type, and a flat membrane type.

There are no particular restrictions on the material of the filtration membrane, as long as the material employed has durability against the silver nanoparticle dispersion liquid. A material that is appropriately selected from, for example, organic films such as those made of polyethylene, tetrafluoroethylene, polypropylene, cellulose acetate, polyacrylonitrile, polyimide, polysulfone, and polyether sulfone; and inorganic films such as those made of silica, alumina, zirconia, and titania may be used.

Specific examples of the abovementioned filtration membrane include microza (by Asahi Kasei Chemicals Corporation), Amicon Ultra (by Merck Millipore Corporation), MOLSEP (DAICEN MEMBRANE-SYSTEMS Ltd.), Ultra filter (by Advantec Toyo Kaisha, Ltd.) and MEMBRALOX (by Nihon Pall Ltd.).

When an additive as an optional component is added, the additive is preferably blended thereinto after the step (3) of membrane filtration has been completed.

### <Member>

The photocatalyst-silver nanoparticle dispersion liquid can be used to form the antiviral composition on the surfaces of various types of members. Here, there are no particular restrictions on the types of such members; examples of the materials in such member include organic materials and inorganic materials. These members may have various shapes depending on their purposes and intended uses.

Examples of the organic materials include synthetic resin materials such as a polyvinyl chloride resin (PVC), polyethylene (PE), polypropylene (PP), polycarbonate (PC), an acrylic resin, polyacetal, a fluorocarbon resin, a silicone resin, an ethylene-vinyl acetate copolymer (EVA), acrylonitrile-butadiene rubber (NBR), polyethylene terephthalate (PET), polyethylene naphthalate (PEN), polyvinyl butyral (PVB), an ethylene-vinyl alcohol copolymer (EVOH), a polyimide resin, polyphenylene sulfide (PPS), polyetherimide (PEI), polyether ether imide (PEEI), polyether ether ketone (PEEK), a melamine resin, a phenolic resin, and an acrylonitrile-butadiene-styrene (ABS) resin; natural materials such as natural rubbers; and semisynthetic materials of these synthetic resin materials with natural materials. These materials may already be processed into particular shapes and structures such as those of films, sheets, fiber materials, fiber products, or other molded products as well as laminated bodies.

Examples of the inorganic materials include non-metallic inorganic materials and metallic inorganic materials. Examples of the non-metallic inorganic materials include glass, ceramics, and stone materials. They may already be processed into various shapes such as those of tiles, glass products, mirrors, walls and design materials. Examples of the metallic inorganic materials include cast iron, steel, iron, iron alloys, aluminum, aluminum alloys, nickel, nickel alloys, and zinc die-cast. They may already be plated with the above metallic inorganic materials or coated with the above organic materials, or even be used to plate the surfaces of the above organic materials or non-metallic inorganic materials.

In the present invention, a binder that is conventionally used may be added so long as the transparency of the antiviral composition is not impaired.

As a method for forming the antiviral composition on the surfaces of the various members, the silver nanoparticle dispersion liquid may, for example, be applied to the surface of an above-listed member by a known application method such as spray coating and dip coating, followed by performing drying by a known drying method such as far-infrared drying, IH drying, and hot-air drying. The thickness of the dried and solidified silver nanoparticles may be determined variously; it is preferred that the thickness of the composition normally fall into a range of 10 nm to 10 µm. The above-explained method allows the antiviral composition to be formed on the surface of the member.

The antiviral composition formed in this way on the surface of a member is transparent (having a haze value of preferably 3% or less, more preferably of 2.7% or less), exhibits antiviral efficacies in a dark place, and provides an antiviral efficacy that is further enhanced by light irradiation, and therefore various types of members having the antiviral composition formed on their surfaces are allowed to exhibit antiviral efficacies on their surface.

### Examples

The present invention will be specifically described below with reference to working and comparative examples, but the present invention shall not be limited to the following working examples.

The respective measurements of the present invention were performed as follows.

### (1) Antiviral test of silver nanoparticle composition

Antiviral activity value was calculated based on JIS R1756:2020 "Fine ceramics (advanced ceramics, advanced technical ceramics)- Determination of antiviral activity of photocatalytic materials under indoor lighting environment-Test method using bacteriophage Q-beta" to evaluate the antiviral activity of the composition using the criteria to be explained below.

A glass piece (hereafter also referred to as test piece) of 50 mm × 50 mm × 2 mm was used as a member on which the composition was formed

### <Antiviral Activity Measurement based on JIS R1756:2020>

A glass rod was placed in a moisturized petri dish, and a test piece was placed on top of the glass rod. 200 µL of bacteriophage solution was placed on the test piece, and the bacteriophage solution was covered with a covering film, and then the petri dish was covered with a moisturizing glass. The prepared petri dish was left to stand for 4 hours in a dark place (0 lx) or a bright place (500 lx of visible light from a white fluorescent lamp with wavelengths of 380 nm or less cut off). A digital illumination meter LX-105 (manufactured by CUSTOM corporation) was used to measure the illuminance. After being left to stand, the test piece and the covering film were transferred to a sterilized stomacher bag, washed out with 5 mL of physiological saline containing a surfactant, and the bacteriophage solution was collected. The collected bacteriophage solution was diluted, and 100 µL each of the solution and Escherichia coli solution were mixed into which a soft agar medium was further mixed, and then the mixture was plated on the medium. The number of killed coliform bacteria (plaques) was counted after being incubated at 37°C overnight to determine the infectious titer of the virus.

The antiviral activity value based on JIS R1756:2020 is a value obtained by performing the above-explained operation using a test piece treated with antiviral treatment and a plain test piece as a difference in the average values of the common logarithm of the two infectious titers. Antiviral activity value (-) of a test piece treated with antiviral treatment in a dark place = log 10 (Virus infection titer (-) of the test piece treated with antiviral treatment after being left to stand for 4 hours in a dark place) - log 10 (Virus infection titer (-) of the plain test piece after being left to stand for 4 hours in a dark place) Antiviral activity value (-) of a test piece treated with antiviral treatment in a bright place = log 10 (Virus infection titer (-) of the test piece treated with antiviral treatment after being left to stand for 4 hours in a bright place) - log 10 (Virus infection titer (-) of the plain test piece after being left to stand for 4 hours in a bright place).

The light irradiation efficacy can be calculated from the antiviral activity values in the dark and bright places and was evaluated using a criterion defined by: Efficacy brought by light irradiation (Antiviral activity value affected by light irradiation) = Antiviral activity value of a test piece treated with antiviral treatment in a bright place - Antiviral activity value of the test piece treated with antiviral treatment in a dark place
- Antiviral efficacy and light irradiation efficacy were evaluated as High (hereunder denoted as ⊚) when the antiviral activity value of the test piece treated with antiviral treatment in a bright place was 2.0 or higher and the efficacy brought by light irradiation was 0.3 or more.
- Antiviral efficacy and light irradiation efficacy were evaluated as Moderate (hereunder denoted as ∘) when the antiviral activity value of the test piece treated with antiviral treatment in a bright place was 0.3 or higher and the efficacy brought by light irradiation exceeded 0.
- Antiviral efficacy in a dark place was evaluated as non-existent (hereunder denoted as ×) when the efficacy brought by light irradiation was 0 or lower.

### (2) Transparency of Silver Nanoparticle Composition

A haze value (%) of a glass plate, serving as a base plate, was measured. Then, the silver nanoparticle dispersion liquid adjusted to contain the metal components at the concentration of 450 ppm was applied to the glass plate so as to be 10 g/m², and then dried to form a silver nanoparticle composition on the glass base plate to measure a haze value of the glass plate on which the composition was formed. The difference in haze value of the silver nanoparticle composition was calculated from the difference between the haze value of the glass plate itself and the haze value of the glass plate on which the composition was formed. A haze meter (Product name: "Digital haze meter NDH-200" manufactured by NIPPON DENSHOKU INDUSTRIES CO., LTD.) was used for the haze value measurement. Transparencies of the silver nanoparticle compositions were evaluated from the calculated haze value differences using the following criteria:
- Evaluated as extremely favorable (hereunder denoted as ⊚) when the difference was 3% or less.
- Evaluated as favorable (hereunder denoted as ∘) when the difference exceeded 3% and was less than or equal to 5%.
- Evaluated as unfavorable (hereunder denoted as ×) when the difference exceeded 5%.

### [Working Example 1]

### <Preparation of silver nanoparticle dispersion liquid protected by sodium citrate>

Pure water was used as the solvent, and silver nitrate was dissolved thereinto so that the Ag concentration was 65.0 mmol/L to obtain a solution (I) containing the raw material silver compound.

98.5% by mass of pure water as a solvent, 0.5% by mass of ferrous sulfate as a reducing agent, and 1.0% by mass of trisodium citrate dihydrate as a reducing/protective agent were mixed with each other to obtain a solution (i) containing the reducing and protective agents.

1500 mL of the solution (i) containing the reducing and protective agents at 25°C was mixed into 300 mL of the solution (I) containing the raw material silver compound at 25°C in a reactor to obtain a liquid (pH = 4.6), which was concentrated with the aid of an ultrafiltration membrane (MOLSEP by DAICEN MEMBRANE-SYSTEMS Ltd.) having a molecular weight cut-off of 10,000 and washed with pure water, thereby obtaining a silver nanoparticle dispersion liquid (α). A tabletop pH Analyzer F-71 (manufactured by HORIBA Advanced Techno, Co., Ltd.) was used for the measurement of pH.

The metal concentration of the resultant silver nanoparticle dispersion liquid was measured by ICP-OES (Agilent Technologies, Inc.), and the mass ratio of the protective agent to the metal component was calculated from the non-volatile content concentration and the metal concentration. Further, the resultant silver nanoparticle dispersion liquid was diluted to a predetermined concentration to measure the dispersed particle diameter with the aid of ELSZ-2000ZS (by Otsuka Electronics Co., Ltd.). Furthermore, a transmission electron microscope (H-9500 manufactured by Hitachi High-Technologies Corporation) was used to take images of the resultant silver nanoparticle dispersion liquid from which projected area equivalent circle diameters (Heywood diameter) of approximately 1,000 non-overlapping particles randomly selected from multiple particle images were measured to calculate the primary particle diameter of the silver nanoparticles based on the arithmetic mean value of the projected area equivalent circle diameters. The compositions and physical properties of the silver nanoparticle dispersion liquids are summarized in Table 1 below.

The silver nanoparticle dispersion liquid (α) was adjusted so as to have the metal component concentration of 450 ppm, and then the liquid was applied to a glass base plate so as to be 10 g/m², and then dried to form a silver nanoparticle composition (A) on the glass base plate. The silver nanoparticle composition (A) was subjected to the respective evaluations.

The results of the antiviral properties are as summarized in Table 2 and the transparencies of the glass pieces each having the silver nanoparticle composition on their surface are summarized in Table 3.

### [Working Example 2]

### <Preparation of silver nanoparticle dispersion liquid protected by tannic acid>

Pure water was used as the solvent, and silver nitrate was dissolved thereinto so that the Ag concentration was 6.0 mmol/L to obtain a solution (II) containing the raw material silver compound.

94.3% by mass of pure water as a solvent, 1.9% by mass of tannic acid as a reducing/protective agent, and 3.8% by mass of potassium hydroxide as a basic substance were mixed with each other to obtain a solution (ii) containing the reducing and protective agents.

100 mL of the solution (ii) containing the reducing and protective agents at 60°C was mixed into 1000 mL of the solution (II) containing the raw material silver compound at 90°C in a reactor to obtain a liquid (pH = 12.6), which was concentrated using an ultrafiltration membrane (MOLSEP by DAICEN MEMBRANE-SYSTEMS Ltd.) having a molecular weight cut-off of 50,000 and washed with pure water, thereby obtaining a silver nanoparticle dispersion liquid (β).

Evaluation samples were prepared in the same manner as in Working example 1 except that the silver nanoparticle composition (B) was obtained from the silver nanoparticle dispersion liquid (β) to carry out the respective evaluations.

### [Working Example 3]

### <Preparation of silver iron nanoparticle dispersion liquid protected by tannic acid and sodium oleate>

Silver nitrate and iron (III) nitrate nonahydrate were dissolved into pure water so that the Ag concentration was 6.0 mmol/L and Fe concentration was 1.1 mmol/L to obtain a solution (III) containing the raw material silver compound.

92.4% by mass of pure water as a solvent, 1.9% by mass of tannic acid as a reducing/protective agent, 1.9% by mass of sodium oleate as a protective agent, and 3.8% by mass of potassium hydroxide as a basic substance were mixed with each other for preparation to obtain a solution (iii) containing the reducing and protective agents.

A silver iron nanoparticle dispersion liquid (γ) was obtained in the same manner as in Working Example 2 except that the solution (III) containing the raw material silver compound was used in place of the solution (II) containing the raw material silver compound, and that the solution (iii) containing the reducing and protective agents was used in place of the solution (ii) containing the reducing and protective agents. The solution before being concentrated by the ultrafiltration membrane and washed with pure water had a pH of 12.7. In addition, the content of silver component with respect to the mass of the metal components of the silver iron nanoparticles in the silver iron nanoparticle dispersion liquid (γ) was 90% by mass while the iron content thereof was 10% by mass.

Evaluation samples were prepared in the same manner as in Working example 1 except that the silver iron nanoparticle composition (C) was obtained from the silver iron nanoparticle dispersion liquid (γ) to carry out the respective evaluations.

### [Working Example 4]

### <Preparation of silver palladium nanoparticle dispersion liquid protected by polyvinylpyrrolidone>

Silver nitrate and palladium nitrate dihydrate were dissolved thereinto using pure water as a solvent so that the Ag concentration was 6.0 mmol/L and Pd concentration was 0.1 mmol/L to obtain a solution (IV) containing the raw material silver compound.

55% by mass of ethylene glycol and 8% by mass of pure water as solvents, 2% by mass of potassium hydroxide as a basic substance, 20% by mass of hydrazine monohydrate as a reducing agent, 5% by mass of dimethylaminoethanol, and 10% by mass of polyvinylpyrrolidone K30 (PVP manufactured by FUJIFILM Wako Pure Chemical Corporation) as a reducing/protective agent, were mixed with each other to obtain a solution (iv) containing the reducing and protective agents.

A silver palladium nanoparticle dispersion liquid (δ) was obtained in the same manner as in Working Example 2 except that the solution (IV) containing the raw material silver compound was used in place of the solution (II) containing the raw material silver compound, and that the solution (iv) containing the reducing and protective agents was used in place of the solution (ii) containing the reducing and protective agents. The solution before being concentrated by the ultrafiltration membrane and washed with pure water had a pH of 13.2. In addition, the content of silver component with respect to the mass of the metal components of the silver palladium nanoparticles in the silver palladium nanoparticle dispersion liquid (δ) was 98% by mass while the palladium content thereof was 2% by mass.

Evaluation samples were prepared in the same manner as in Working example 1 except that the silver nanoparticle composition (D) was obtained from the silver palladium nanoparticle dispersion liquid (δ) to carry out the respective evaluations.

### [Working Example 5]

### <Preparation of silver palladium nanoparticle dispersion liquid protected by polyvinylpyrrolidone>

A silver palladium nanoparticle dispersion liquid (ε) was obtained in the same manner as in Working Example 4 except that the solution containing the raw material silver compound had a temperature set at 25°C and that the solution containing the reducing and protective agents had a temperature set at 25°C. The solution before being concentrated by the ultrafiltration membrane and washed with pure water had a pH of 13.2.

Evaluation samples were prepared in the same manner as in Working example 1 except that the silver nanoparticle composition (E) was obtained from the silver palladium nanoparticle dispersion liquid (ε) to carry out the respective evaluations.

### [Comparative Example 1]

### <Preparation of coarse silver particle dispersion liquid>

Silver nitrate was dissolved thereinto using pure water as a solvent so that the Ag concentration was 4.00 mmol/L to obtain a solution (V) containing the raw material silver compound.

55% by mass of ethylene glycol and 18% by mass of pure water as solvents, 2% by mass of potassium hydroxide as a basic substance, 20% by mass of hydrazine monohydrate as a reducing agent, and 5% by mass of dimethylaminoethanol were mixed with each other to obtain a solution (v) containing the reducing agent.

A silver particle dispersion liquid (ζ) was obtained in the same manner as in Working Example 1 except that the solution (V) containing the raw material silver compound was used in place of the solution (I) containing the raw material silver compound, and that the solution (v) containing the reducing agent was used in place of the solution (i) containing the reducing and protective agents. The solution before being concentrated by the ultrafiltration membrane and washed with pure water had a pH of 13.2.

Evaluation samples were prepared in the same manner as in Working example 1 except that the silver particle composition (F) was obtained from the silver particle dispersion liquid (ζ) to carry out the respective evaluations.

### [Comparative Example 2]

Silver thin plate (G) was used as an evaluation sample to carry out the respective evaluations.

**[Table 1]**

| **Working example / Comparative example** | **Silver nanoparticle dispersion liquid** | **Metal species** | **Protective agent** | **Protective agent / Metal components in silver nanoparticles (Mass ratio)** | **Dispersed particle diameter [nm]** | **Primary particle diameter [nm]** |
|---|---|---|---|---|---|---|
| Working example 1 | α | Ag | Trisodium citrate dihydrate | 0.03 | 3.6 | 3 |
| Working example 2 | β | Ag | Tannic acid | 0.98 | 7.5 | 6 |
| Working example 3 | γ | AgFe | Tannic acid Sodium oleate | 0.47 | 15 | 11 |
| Working example 4 | δ | AgPd | PVP | 6.26 | 69 | 31 |
| Working example 5 | ε | AgPd | PVP | 8.21 | 180 | 92 |
| Comparative example 1 | ζ | Ag | - | 0 | >1000 | 112 |

**[Table 2]**

| **Working example / Comparative example** | **Silver nanoparticle composition** | **Antiviral activity value [-]** | | | |
|---|---|---|---|---|---|
| | | **Dark place** | **Bright place** | **Efficacy brought by light irradiation** | **Evaluation** |
| Working example 1 | A | 4.9 | 5.2 | 0.3 | ⊚ |
| Working example 2 | B | 3.2 | 3.6 | 0.4 | ⊚ |
| Working example 3 | C | 3.3 | 5.1 | 1.8 | ⊚ |
| Working example 4 | D | 1.4 | 1.7 | 0.3 | ○ |
| Working example 5 | E | 1.1 | 1.5 | 0.4 | ○ |
| Comparative example 1 | F | 1.2 | 1.3 | 0.1 | × |
| Comparative example 2 | G | 1.4 | 1.4 | 0 | × |

**[Table 3]**

| **Working example / Comparative example** | **Silver nanoparticle composition** | **Haze value [%]** | **Evaluation** |
|---|---|---|---|
| Working example 1 | A | 1.8 | ⊚ |
| Working example 2 | B | 2.2 | ⊚ |
| Working example 3 | C | 2.4 | ⊚ |
| Working example 4 | D | 3.1 | ○ |
| Working example 5 | E | 3.5 | ○ |
| Comparative example 1 | F | 7.8 | × |
| Comparative example 2 | G | - | × |

As shown from the results of the working examples 1 to 5, the antiviral compositions, formed from the silver nanoparticle dispersion liquids, wherein the mass ratio of the protective agent adsorbed on the surfaces of silver nanoparticles relative to the metal components in the silver nanoparticles was 10 or less, and wherein the silver nanoparticles had a dispersed particle diameter of 1000 nm or less and a primary particle diameter of 500 nm or less, had excellent transparency and exhibited an antiviral activity value greater than 0.3 (50% of the viruses were inactivated) in a dark place while the composition exhibited a light irradiation efficacy (antiviral activity value affected by light irradiation) of greater than 0, showing antiviral efficacy of the composition and enhancement in the antiviral efficacy by light irradiation. In particular, the working examples 1 to 3 exhibited antiviral activity values in a dark place of 2.0 or more (about 99% of the viruses were inactivated) while the light irradiation efficacy (antiviral activity value affected by light irradiation) was 0.3 or more, thus showing that the compositions had high levels of antiviral efficacy and enhancement in antiviral efficacy by light irradiation.

As shown from the comparative example 1, although the composition containing coarse silver particles surely exhibited antiviral activity in a dark place, no enhancement in antiviral efficacy brought by light irradiation was observed. In addition, the composition had a large haze value and was opaque, which potentially compromises the designability of the member.

As shown from the comparative example 2, although the silver thin plate exhibited antiviral efficacy in a dark place, no further enhancement in antiviral efficacy brought by light irradiation was observed.

## Claims

1. An antiviral composition comprising silver nanoparticles as an active component, said silver nanoparticles having a protection agent adsorbed on the surface thereof and having a dispersed particle diameter of 1000 nm or less and a primary particle diameter of 500 nm or less, wherein the composition exhibits an antiviral activity value greater than 0.3 based on JIS R1756:2020 in a dark place, while the composition exhibits an antiviral activity value that is positively affected by light irradiation based on JIS R1756:2020.

2. The antiviral composition according to claim 1, wherein an amount by mass of the protection agent to the amount by mass of metal components in the silver nanoparticles is in a range from 0.001 to 10.

3. The antiviral composition according to claim 1 or 2, wherein the composition exhibits a haze value of 3% or less.

4. A member comprising the antiviral composition according to claim 3 on a surface of the member.

5. The antiviral composition according to claim 1 or 2, further comprising an aqueous dispersion medium.
